# EUROPEAN PATENT SPECIFICATION

(11) **EP 1 530 210 B1**
(45) Date of publication and mention of the grant of the patent: **13.01.2010**
(21) Application number: 04025939.2
(22) Date of filing: 02.11.2004
(51) Int. Cl.: G11B 9/00

(54) **Information recording/reproducing apparatus and recording medium**
Informationsaufzeichnungs-/wiedergabegerät und Aufzeichnungsmedium
Appareil d'enregistrement/reproduction d'informations et milieu d'enregistrement

(30) Priority: 06.11.2003 JP 2003376966
(43) Date of publication of application: 11.05.2005
(73) Proprietor: Pioneer Corporation, Meguro-ku, Tokyo (JP)
(72) Inventor: Maeda, Takanori, Pioneer Corporation, Tsurugashima-shi Saitama (JP); Onoe, Atsushi, Pioneer Corporation, Tsurugashima-shi Saitama (JP)
(74) Representative: Reinhard - Skuhra - Weise & Partner GbR

(56) References cited:
- EP-A- 1 385 161
- WO-A-00/36608
- US-A- 5 412 641
- US-A- 5 490 132
- US-B1- 6 249 503
- US-B1- 6 272 083

## Description

### BACKGROUND OF THE INVENTION

### 1. Field of the Invention

The present invention relates to an information recording / reproducing apparatus for recording information onto a recording medium or reading and reproducing the information recorded on the recording medium, by using a probe array having a plurality of probes, as well as the recording medium used for such an information recording / reproducing apparatus.

### 2. Description of the Related Art

In technical fields in which information, such as video or an image, music, a text, and a program, is recorded on a recording medium, an improvement in the recording density of the information is required. In order to improve the recording density of the information, a technique of realizing super-high-density recording and reproducing of the information is being developed by applying a technique of Scanning Probe Microscopy (SPM).

For example, such thermomechanical recording is known that the information is recorded by using a cantilever, which has a nano-scaled sharp tip portion, to form a small hole in a thin plastic film.

Moreover, such a technique is also known that the information recorded on a ferroelectric thin film is reproduced by using a technique of Scanning Nonlinear Dielectric Microscopy (SNDM). In this technique, the information is recorded by locally applying an electric field, which is stronger than the coercive electric field (coercive force) of a ferroelectric substance, from a probe onto the thin film, which is constructed from the ferroelectric substance, to thereby locally changing the polarization direction of the ferroelectric substance. Then, the information recorded in the ferroelectric thin film is read via the probe and reproduced.

According to an information recording / reproducing apparatus and a recording medium to which these techniques are applied, it is possible to record the information onto the recording medium, with the smallest unit of the information (e.g. 1 bit data) as a small mark of several tens nanometers. This allows the super-high-density recording of the information beyond the limitation of conventional magnetic recording or optical recording, the reduction in size of the apparatus or recording medium, and large capacity recording.

On the other hand, for the practical application of the super-high-density recording and large capacity recording of the information, it is required to read a large amount of information recorded on the recording medium at high speed. As a technique which allows the high-speed reading of the information, such a technique has been developed that a probe array or a cantilever array in which many probes or many cantilevers are arranged in an array shape is provided for a head of the information recording / reproducing apparatus and that through this prove array or the cantilever array, the information recorded on the recording medium is read at a time.

WO 00/36608 discloses a molecular memory medium having a media surface and a platform with read/write heads.

The platform and media are moved to allow one of addition, removal and repositioning of atoms, electrons, and charges on a surface of the media. The media is in a material capable of storing data written to it, and detectable using a vibrating tip sensor that resonates at a free space value which is phase shifted when charges or anomalies on a surface of the media are present. Other methods of reading and writing to the media are presented. The media may be enhanced by augmenting grain boundaries of the media via the position and removal of PMMA materials. Servo trenches and sync bits identify positions of the read/write heads and maintain alignment during memory operations.

EP 1 385 161 A2 discloses a storage device and a method for scanning a storage medium. A storage medium for storing data in the form of marks is scanned by an array of probes for mark detecting purposes in a scanning mode. The storage medium has fields with each field to be scanned by an associated one of said probes. At least one of said fields comprises marks representing operational details for operating said scanning mode. Scanning parameters are computed from said operational data and scanning mode is adjusted according to said computed parameters.

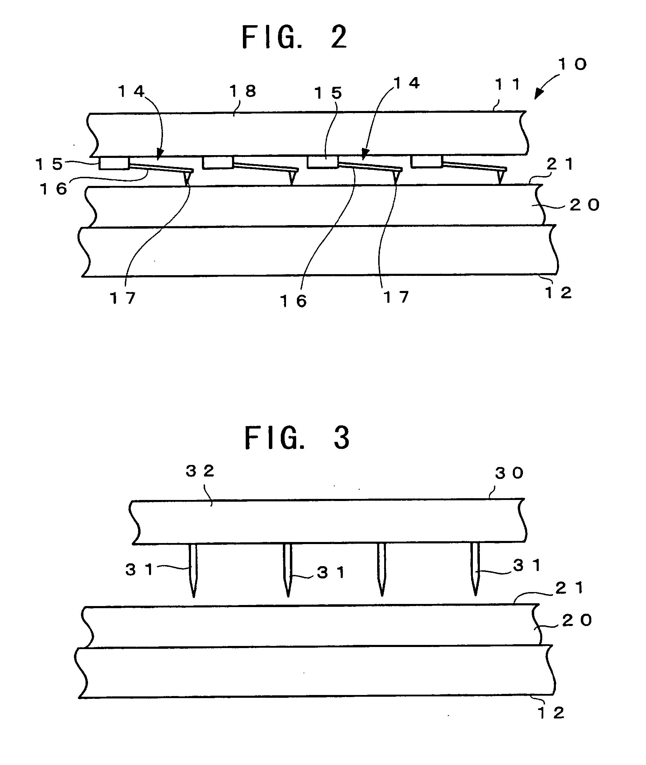

Kohyo (Japanese Unexamined Patent Publication) No. Hei 9-511863 discloses a memory apparatus capable of reading the information recorded on the recording medium at a time via the probe array. The memory apparatus is provided with the probe array in which many probes are arranged in one body. On the other hand, many memory fields (i.e. recording areas) are formed on a surface of a memory medium (i.e. the recording medium). Each probe is disposed to face respective one of the memory fields. There is a one-to-one correspondence not only in position but also in function between individual probes and individual memory fields. Namely, the individual probes have functions to scan the individual memory fields, each of which corresponds to respective one of the probes in position, to thereby record or read the information. In the memory medium, the individual memory fields are arranged not to overlap each other. Moreover, in order to clearly distinguish data in each field, a certain distance is given between adjacent fields (refer to FIG. 2 and FIG. 3 in the above-described publication).

According to the memory apparatus, the positions of the probes in the respective memory fields can be changed at a time by displacing the position of the probe array with respect to the memory medium in parallel with the surface of the memory medium. This makes it possible to scan many memory fields at a time via many probes and to read much information recorded on the recording medium at high speed.

### SUMMARY OF THE INVENTION

In the memory apparatus disclosed in the above-described publication, one probe corresponds to one recording area (i.e. one memory field), and each of the probes scans respective one of the recording areas. In order to realize such a function, it is enough if each probe can scan only one recording area corresponding to the probe. Therefore, it is enough if the scan range of each probe covers an entire range of one recording area corresponding to the probe, and usually, it is unnecessary to extend the scan range to another recording area.

However, if the scan range of each probe is limited to the range of one recording area corresponding to the probe, in the case where one or several probes of the many probes arranged in the probe array deteriorate or have trouble, it is not possible to properly scan the recording areas corresponding to the probes that deteriorate or have trouble. This is because there is only one probe which can scan the corresponding recording area, so that if the probe comes to malfunction, that causes the complete loss of a device for scanning the corresponding recording area. This is disadvantageous.

On the other hand, in order to scan each recording area by respective one of the probes to thereby read the information recorded in each recording area, it is necessary to displace the recording medium or the probe array in parallel with a recording surface of the recording medium, to thereby displace the respective one of the probes in each recording area. In the memory apparatus disclosed in the above-described publication, each probe can be displaced in directions which are parallel to the recording surface and which are along two axes that intersect at right angles (i.e. in a X direction and a Y direction). In the memory apparatus, the probe is displaced straight between one end portion (edge) and the other portion (edge) of the recording area whose external shape is substantially square. For example, in scanning the entire area of one recording area, the probe reciprocates between the left edge and the right edge of the recording area many times, while moving little by little between the upper edge and the lower edge of the one memory area.

In order to scan the recoding area by using the probe, to thereby record and read the information, it is desirable to stabilize the displacement speed of the probe to a constant speed. Moreover, in order to make the probe from a stop condition to a displacement condition at a constant speed, it is necessary to make the probe move a degree of distance to give momentum. Thus, if the probe reciprocates between one end portion and the other end portion of the recording area, the areas near the end portions in the memory area are substantially preparation areas, and the reliable recording or reading of the information in this area cannot be expected. Considering such circumstances, if the scan range of each probe is limited to the range of one recording area corresponding to the probe, substantially, an area in which the information can be recorded or read is only the central portion of the recording area. This decreases the recoding capacity of the information. This is disadvantageous.

It is therefore a first object of the present invention to provide an information recording / reproducing apparatus which can properly scan each recording area even if one portion of probes arranged on a probe array deteriorate or have trouble, as well as a recording medium used for the information recording / reproducing apparatus.

It is a second object of the present invention to provide an information recording / reproducing apparatus which can realize the reliable recording or reading of the information while displacing the probe at a stable speed, as well as a recording medium used for the information recording / reproducing apparatus.

The above objects of the present invention can be achieved by an information recording / reproducing apparatus with the feature of claim 1.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a perspective view showing a first embodiment of an information recording / reproducing apparatus and a recording medium of the present invention;
FIG. 2 is a side view showing one portion of the information recording / reproducing apparatus and the recording medium shown in FIG. 1;
FIG. 3 is a side view showing a modification example of a probe array;
FIG. 4 is a plan view showing the first embodiment of the recording medium of the present invention;
FIG. 5 is a plan view showing a modification example of a recording area;
FIG. 6 is an explanatory diagram showing scan ranges of probes in the first embodiment of the information recording / reproducing apparatus of the present invention;
FIG. 7 is an explanatory diagram showing another specific example of the scan ranges of the probes in the first embodiment of the information recording / reproducing apparatus of the present invention;
FIG. 8 is an explanatory diagram showing another specific example of the scan ranges of the probes in the first embodiment of the information recording / reproducing apparatus of the present invention;
FIG. 9 is an explanatory diagram showing another specific example of the scan ranges of the probes in the first embodiment of the information recording / reproducing apparatus of the present invention;
FIG. 10 is a block diagram showing a specific example of a scan control device in the first embodiment of the information recording / reproducing apparatus of the present invention;
FIG. 11 is a block diagram showing scan control in the first embodiment of the information recording / reproducing apparatus of the present invention;
FIG. 12 is a block diagram showing scan control in the first embodiment of the information recording / reproducing apparatus of the present invention;
FIG. 13 is a plan view showing a second embodiment of the recording medium of the present invention;
FIG. 14 is a block diagram showing a specific example of the scan control device in the second embodiment of the information recording / reproducing apparatus of the present invention;
FIG. 15 is a block diagram showing scan control in the second embodiment of the information recording / reproducing apparatus of the present invention;
FIG. 16 is a block diagram showing scan control in the second embodiment of the information recording / reproducing apparatus of the present invention;
FIG. 17 is a perspective view showing an example of the information recording / reproducing apparatus of the present invention;
FIG. 18 is a plan view showing an example of the recording medium of the present invention;
FIG. 19 is an explanatory diagram showing scan ranges in the example of the information recording / reproducing apparatus of the present invention;
FIG. 20 is a flowchart showing a scan-range-change-process in the example of the recording medium of the present invention; and
FIG. 21 is an explanatory diagram showing a speed-control-process in the example of the recording medium of the present invention.

### DETAILED DESCRIPTION OF THE PREFERRED EMBODIMENTS

Embodiments of the present invention will be hereinafter explained with reference to the drawings. Incidentally, the content of the drawings used for the explanation of the embodiments of the present invention embodies constitutional elements or the like of the present invention only for the purpose of explaining technical ideas thereof. The shape, size, position, connection relationship, and the like of each constitutional element or the like are not limited to the content of the drawings. More concrete examples to carry out the present invention will be disclosed in the section titled "Example".

### (First Embodiment)

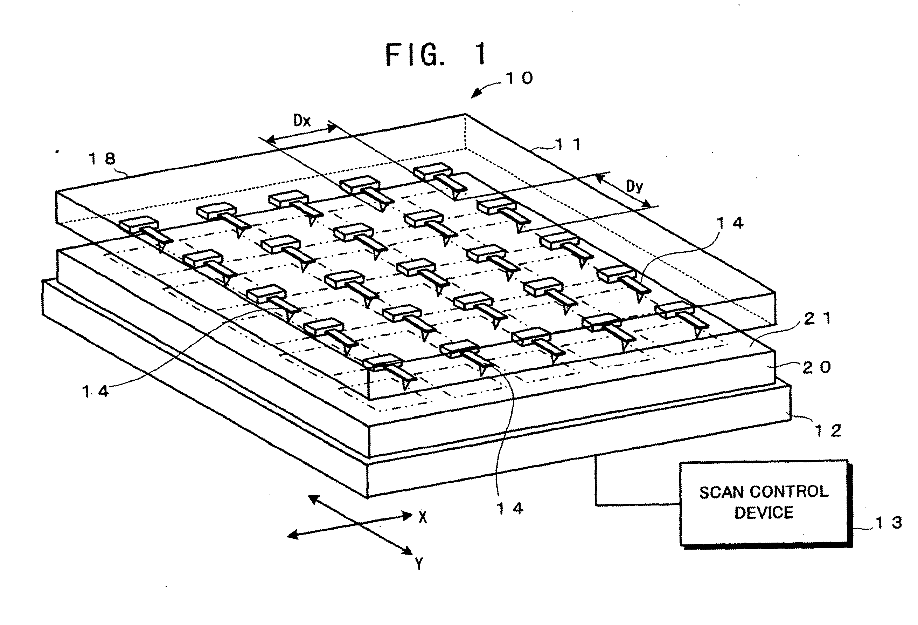

The first embodiment of the information recording / reproducing apparatus of the present invention will be explained. FIG. 1 shows the first embodiment of the information recording / reproducing apparatus of the present invention. An information recording / reproducing apparatus 10 in FIG. 1 records information, such as video or an image, music, a text, and a program, onto a recording medium 20 or reads and reproduces the information recorded on the recording medium 20. The information recording / reproducing apparatus 10 can record a plurality of information (much information) onto the recording medium 20 at a time or reading the plurality of information recorded on the recording medium 20, by using a probe array 11 having a plurality of probes 14. The information recording / reproducing apparatus 10 can be used as a memory apparatus or a recording / reproducing apparatus which is small, independent, and single as a whole. The information recording / reproducing apparatus 10 can be also incorporated into various apparatuses, such as a computer, an audio apparatus, a control apparatus for automobiles and airplanes, a medical apparatus, and a robot, and can be made function as a large-capacity memory apparatus for these apparatuses.

The information recording / reproducing apparatus 10 is provided with: the probe array 11; a displacement mechanism 12; and a scan control device 13.

The probe array 11 has the plurality of probes 14 for scanning a plurality of recording areas 22 arranged on a recording surface 21 of the recording medium 20, in order to control the recording of the information, the reading of the information, or the recording or reading of the information. The information recording / reproducing apparatus 10 can record or read the information at a time, with respect to the recording medium 20, via the plurality of probes 14. Incidentally, for convenience of explanation, FIG. 1 shows a substrate 18 of the probe array 11 in a perspective or see-through manner.

FIG. 2 shows the information recording / reproducing apparatus 10 shown in FIG. 1 along with the recording medium 20, illustrated from the side. As shown in FIG. 2, each probe 14 is a cantilever, provided with a support portion 15; an arm 16; and a needle 17. The tip side of the needle 17 extends to the recording surface 21 of the recording medium 20, and the basic or anchor end side thereof is supported by the substrate 18 of the probe array 11 via the arm 16 and the support portion 15. Incidentally, the structure or shape of the probe is not limited to the cantilever. As in a probe array 30 (i.e. a modification example of the probe array 11) shown in FIG. 3, each probe 31 may be bar-shaped and may stand on a substrate 32 of the probe array 30. Specifically, the basic or anchor end side of each probe 31 is fixed on the substrate 32, and the tip side is extended to the recording surface 21 of the recording medium 20.

In FIG. 2, the diameter of the tip of the needle 17 of the probe 14 is desirably on the order of nanometer or sub micron. By reducing the diameter of the tip of the needle 17, it is possible to increase the recording density of the information of the recording medium 20. The probe 14 provided with such a small needle 17 can be formed from high doped silicon or diamond, for example. Moreover, as the probe 14, it is also possible to use a cantilever which is the same as a cantilever used for Atomic Force Microscopy (AFM). Incidentally, the bar-shaped probe 31 as shown in FIG. 3 can be formed from a tungsten needle or a carbon nanotube.

Incidentally, the following methods are known as an information recording method: for example, a method of recording the information by opening a hole in a polymer film with heat; a method of recording the information by using a spontaneous polarization of a ferroelectric substance; a method of recording the information by using charge accumulation of a laminated material constructed from a silicon oxide film and a silicon nitride film or the like; a method of recording the information by using a near-field optical technique, and the like. It is possible to adopt any of the methods in the information recording / reproducing apparatus 10. The following methods are known as an information reproducing method: for example, a method which uses the technique of the SNDM; a method which uses a technique of Scanning Maxwell-stress Microscopy; a method which uses a technique of Kelvin Force Microscopy; a method which uses a technique of Scanning Capacitance Microscopy; and a method which uses the near-field optical technique. It is possible to adopt any of the methods in the information recording / reproducing apparatus 10. Depending on which method is adopted out of these recording methods and reproducing methods, specific structures, shapes, and materials of the probes 14 and 31 are determined in some cases.

As shown in FIG. 1, there are twenty-five probes 14, arranged in a matrix of 5 × 5 on the substrate 18 of the probe array 11. The probes 14 are disposed at a constant distance apart from each other on the substrate 18. Namely, as shown in FIG. 1, if two directions which mutually intersect at right angles in the recording surface 21 are an X direction and a Y direction, a distance between the needles 17 of two probes 14 which are mutually adjacent in the X direction is Dx. Moreover, a distance between the needles 17 of two probes 14 which are mutually adjacent in the Y direction is Dy. Each probe 14 is fixed on the substrate 18, and the position relationship among the probes 14 on the substrate 18 does not change.

Incidentally, the number of the probes is not limited. It may be two, a thousand, or ten thousands. The increase in the number of the probes possibly increases the reading speed of the information recorded on the recording medium. The placement of the probes is not limited to the matrix shape, either. For example, several tens of probes may be arranged in a line. However, as in the information recording / reproducing apparatus 10, if the probe array 11 is displaced in the X direction and in the Y direction with respect to the recording medium 20, it is convenient to arrange the probes in the matrix shape. If so, it is possible to efficiently use the recording surface of the recording medium for the recording of the information, to thereby increase the recording density of the information, for example. Moreover, in the example shown in FIG. 1, the distance of the probes 14 which are mutually adjacent in the X direction is Dx, and the distance of the probes 14 which are mutually adjacent in the Y direction is Dy. However, Dx and Dy may be mutually different distances or may be the same distances.

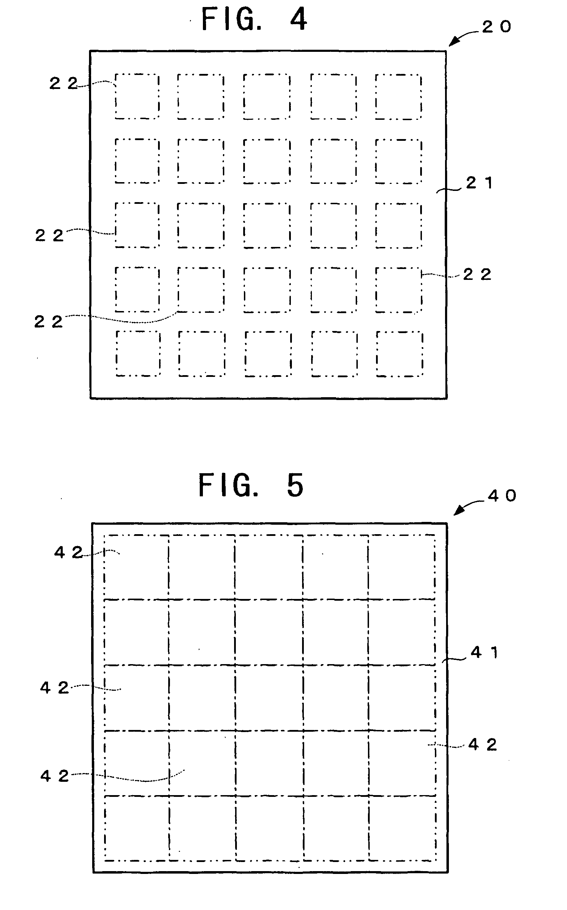

FIG. 4 shows the recording medium 20, viewed from the recording surface 21 side. As shown in FIG. 4, the external shape of the recording medium 20 is quadrilateral. Incidentally, the external shape of the recoding medium may have another shape. Moreover, the plurality of recording areas 22 are disposed on the recording surface 21 of the recording medium 20. The external shape of each recording area 22 is also quadrilateral. Incidentally, the external shape of each recording area may have another shape.

Each recording area 22 is intended to record the information therein. It is expected to record, mainly, so-called content information, such as video, audio, a text, and a program, onto the recording area 22. It is also expected to record tracking information which allows the tracking ( or tracing) of the information by the probe, address information which allows the specification of the information, position information which is used to recognize the position of the probe on the recording surface, or the like, onto the recording area 22. However, a user of the information recording / reproducing apparatus 10 or the recording medium 20 can arbitrarily select what type of information to record onto the recording area 22 (although there is a possibility that the user has to follow the limitation of the standards). In the recording area 22, the information to be recorded by a normal record operation, or the information to be read by a normal reproduction operation of the information recording / reproducing apparatus 10 is mainly recorded.

There are twenty five recording areas 22 on the recording surface 21, arranged in a matrix of 5 × 5. The recording areas 22 are disposed at a certain distance apart from each other. The placement of the recording areas 22 corresponds to the placement of the probes 14. If the number and placement of the probes are different from those shown in FIG. 1, in response to the fact, the number and placement of the recording areas may be changed.

In the example shown in FIG. 4, two recording areas 22 which are mutually adjacent are apart from each other on the recording surface 21. However, as in another recording medium 40 shown in FIG. 5, two recording areas 42 which are mutually adjacent may be in contact with each other.

The material of the recording medium 20 varies depending on the information recording method or the information reproducing method. For example, in the case where the method of recording the information by opening a hole in a polymer film with heat is adopted, a recording layer constructed from a material which is deformable with heat (e.g. PMMA or the like) is provided for the recording medium. On the other hand, in the case where the method of recording the information by using a spontaneous polarization of a ferroelectric substance is adopted, a recording layer constructed from a ferroelectric material (e.g. Lithium tantalite: LiTaO3 or the like) is provided for the recording medium 20.

Back to FIG. 1, the displacement mechanism 12 is a device for displacing the recording medium 20 in parallel with the recording surface 21 of the recording medium 20. For example, the displacement mechanism 12 is an X-Y stage which can displace the recording medium 20 in the X direction and in the Y direction. The displacement mechanism 12 is provided with an actuator for X-direction displacement control and an actuator for Y-direction displacement control. In order to realize the super-high-density recording of the information and the reduction in size, it is necessary to highly accurately control the displacement by the displacement mechanism 12. In this regard, the actuators are desirably formed from a piezoelectric material, such as PZT. Incidentally, the displacement mechanism 12 may be a mechanism which displaces the probe array 11 or the recording medium 20 in parallel with the recording surface 21 of the recording medium 20. Namely, in the example shown in FIG. 1, the recording medium 20 is made movable with the probe array 11 fixed. However, the probe array 11 may be made movable with the recording medium 20 fixed.

The scan control device 13 defines the scan range of each of the probes 14 and performs scan control of the plurality of probes 14 in cooperation with the displacement mechanism 12. The scan control device 13 can be realized by a semiconductor integrated circuit or a computer provided with an operation processing circuit and a memory circuit, for example.

Under the control of the scan control device 13, each probe 14 scans the recording surface 21 in order to record or read the information. The "scan" means to record or read the information while the probe 14 is displaced on the recording surface 21. The scan includes not only the case where the content information is recorded or read while the probe 14 is displaced on the recording surface 21, but also the case where control information is read while the probe 14 is displaced on the recording surface 21, to thereby perform tracking control, position control, and displacement-speed control. In reading pieces of information recorded mutually apart from each other on the recording surface 21, a jump operation is performed in some cases, but the jump operation is included in the scan. Moreover, the preparatory movement to stable the displacement speed of the probe 14 with respect to the recording surface 21 is also included in the scan. On the other hand, the displacement of the probe 14 performed to remove the recording medium 20 from the information recording / reproducing apparatus 10 is unrelated to the recording or reading of the information, so that this is not the scan (incidentally, in the information recording / reproducing apparatus which realizes the super-high-density recording, it is not easy to make the recording medium detachable in terms of prevention of position deviation or the like, but it is possible at least theoretically). The scan control device 13 defines a range of the "scan" of the probe 14 in such a sense, and controls the "scan" of the probe 14.

The definition of the scan range of the probe 14 can be realized by storing computer data in which the scan range is written, into a memory circuit of the scan control device 13, and by executing the computer data on an operation processing circuit of the scan control device 13. Moreover, the definition of the scan range of the probe 14 can be also realized by providing a mechanical structure for limiting the (relative) displacement of the probe 14.

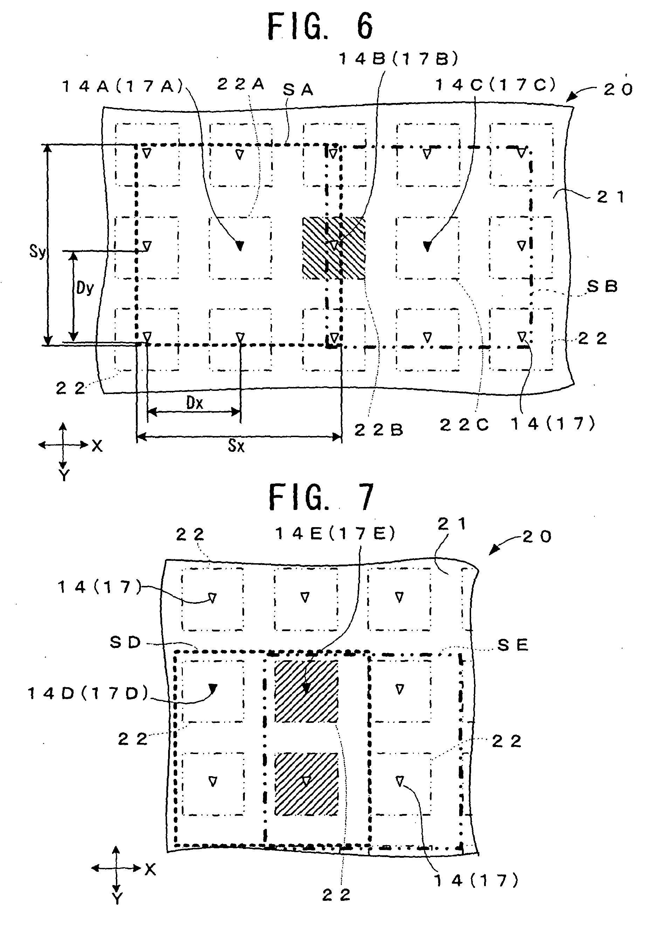

FIG. 6 shows scan ranges of probes 14A and 14C defined by the scan control device 13. FIG. 6 shows an enlarged portion of the information recording / reproducing apparatus 10 and the recording medium 20. For convenience of explanation, the shape of each probe is abstractly shown. Namely, in FIG. 6, fifteen small triangular marks individually indicate the needles 17 of the probes 14. Out of the fifteen triangular marks, black triangular marks individually indicate a needle 17A of the probe 14A, and a needle 17C of the probe 14C. Incidentally, specific reference numerals are given to the probes 14A, 14B, and 14C, merely for convenience of explanation. They do not have different functions from the other probes 14 as far as the technical ideas of the present invention is concerned. Moreover, a thick dotted line in FIG. 6 shows a scan range SA of the probe 14A and a thick two-dot chain line shows a scan range SC of the probe 14C. Incidentally, the "scan range of the probe" is accurately expressed as a "scan range of the needle of the probe".

As shown in FIG. 6, the size of the scan range SA of the probe 14A is larger than that of one recording area 22. More specifically, a length Sx in the X direction of the scan range SA is at least twice as long as the distance Dx between two probes 14 which are mutually adjacent in the X direction. A length Sy in the Y direction of the scan range SA is at least twice as long as the distance Dy between two probes 14 which are mutually adjacent in the Y direction. By this, the probe 14A can scan not only a recording area 22A under the probe 14A in FIG. 6, but also the other recording areas 22 in the scan range SA. Specifically, the probe 14A can scan not only the recording area 22A under the probe 14A, but also partially scan the other eight recording areas 22 surrounding the recording area 22A. On the other hand, the size of the scan range SC of the probe 14C is the same as that of the scan range SA of the probe 14A. By this, the probe 14C can scan not only a recording area 22C under the probe 14C in FIG. 6, but also the other recording areas 22 in the scan range SC. Specifically, the probe 14C can scan not only the recording area 22C under the probe 14C, but also partially scan the other eight recording areas 22 surrounding the recording area 22C. As a result, a recording area 22B placed under the probe 14B disposed between the probe 14A and the probe 14C can be scanned not only by the probe 14B, but also by the probe 14A and the probe 14C.

All the probes 14 including the probe 14A, the probe 14B, and the probe 14C are fixed on the substrate 18 of the probe array 11, and their displacement with respect to the recording surface 21 is integrally performed. Therefore, the sizes of the scan ranges of the probes 14, which are defined by the scan control device 13, are all the same. As a result, the scan ranges of two probes 14 which are mutually adjacent are partially overlapped, so that it is possible to scan all the recording areas 22 on the recording surface 21 by using two or more probes 14.

Incidentally, in the example shown in FIG. 6, the scan range is set such that one recording area 22 is placed in the center of the scan range of each probe 14. However, the position relationship between the scan range and the recording area 22 is not limited to this example. For example, as in another example shown in FIG. 7, the scan range may be set such that four recording areas 22 are included in the scan range of each probe 14. Specifically, a scan range SD may be set such that four recording areas 22 are included in the scan rage SD of a probe 14D. A scan range SE may be also set such that four recording areas 22 are included in the scan range SE of a probe 14E. As a result, it is possible to scan two recording areas 22 located in the overlap range of the scan range SD and the scan range SE, by using the probe 14D and the probe 14E.

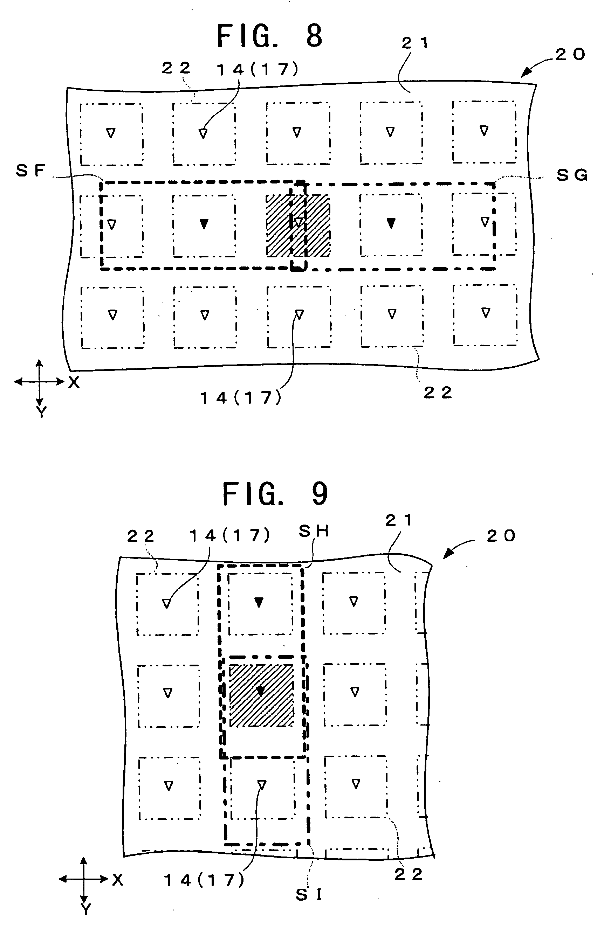

In both FIG. 6 and FIG. 7, the case where the scan range of each probe has a size covering four recording areas 22 is given as an example. However, the present invention is not limited to this example. For example, scan ranges SF and SG as in another modification example shown in FIG. 8 or scan ranges SH and SI as in another modification example shown in FIG, 9 are also possible. Namely, it is enough if the scan range of each of the probes is larger than each of the recording areas. More desirably, it is enough if the scan range of each of the probes is at least twice as long as a distance between two probes which are mutually adjacent, in one direction which is parallel to the recording surface of the recording medium. As in FIG. 6 or FIG. 7, it is more desirable that the scan range of each of the probes is two or more times as long as the distance between two probes which are mutually adjacent, in two directions which are parallel to the recording surface of the recording medium. This is because that increases the overlap portion of the scan ranges of the probes, to thereby produce more effect of the present invention described later.

As described above, the scan control device 13 defines the scan range such that the scan range of each of the probes is larger than each of the recording areas, and performs scan control such that each probe scans the scan range.

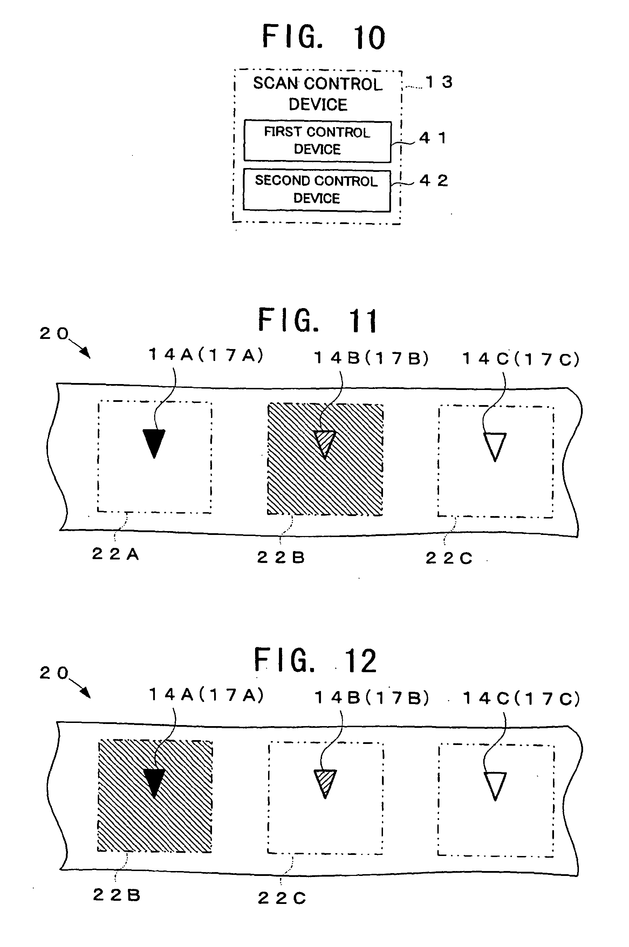

FIG. 10 shows one example of a specific structure of the scan control device 13 to realize the scan control. As shown in FIG. 10, the scan control device 13 may be provided with: a first control device 41; and a second control device 42. The first control device 41 performs scan control such that one probe (a first probe) included in the plurality of probes 14 scans one recording area included in the plurality of recording areas 22. The second control device 42 performs scan control such that another probe (a second probe) which is included in the plurality of probes 14 and which is located adjacent to the first probe scans the one recording area. The first control device 41 and the second control device 42 can be realized by making computer data in which each scan control is written, storing it into the memory circuit in the scan control device 13, reading it as occasion demands, and executing it on the operation processing circuit in the scan control device 13.

FIG. 11 and FIG. 12 show one example of an operation realized by the scan control of the scan control device 13. FIG. 11 and FIG. 12 show an enlarged portion in which the probes 14A, 14B, and 14C are disposed, out of the probe array 11 and the recording medium 20 in FIG. 6. As shown in FIG. 11, normally, under the control of the first control device 41, the probe 14A scans the recording area 22A located under the probe 14A, the probe 14B scans the recording area 22B, and the probe 14C scans a recording area 22C. By this, the probes 14A to 14C read the information recorded in the recording areas 22A to 22C at a time, respectively (or record the information). Incidentally, at the same time of this operation, under the control of the first control device 41, the other probes 14 arranged in the probe array 11 also scan the recording areas 22 located under the probes and read the information recorded in the recording areas 22 (or record the information).

Now, it is assumed that the probe 14B has trouble. In this case, the second control device 42 operates, and the displacement mechanism 12 displaces the recording medium 20 more widely than usual under the control of the second control device 42. Then, under the control of the second control device 42, the probe 14A scans the recording area 22B. By this, even if the probe 14B has trouble, it is possible to accurately read the information recorded in the recording area 22B by using the probe 14A. Moreover, it is possible to accurately record the information into the recording area 22B by using the probe 14A.

On the other hand, the scan control device 13 may be constructed to perform scan control such that one probe included in the plurality of probes 14 scans two of the recording areas 22 which are mutually adjacent, without a break in time. According to this construction, for example, in FIG. 11, under the control of the scan control device 13, the probe 14A can scan not only the recording area 22A while reciprocating therein, but also scan it continuously until reaching from the recording area 22A to the recording area 22B. By this, it is possible to continuously scan the recording area 22A and the recording area 22B by using one probe 14A, while maintaining a constant displacement speed. Therefore, it is possible to speed up the scan process. Moreover, it is also possible to stabilize the displacement speed of the probe 14A with respect to the recording medium 20 to a constant speed on the basis of the control information recorded in the recording area 22A, and then to scan the recording area 22B by using the probe 14A. By this, it is possible to certainly read the information recorded near the end portion (i.e. the edge portion) in the recording area 22B at a stable constant displacement speed. Alternatively, it is possible to certainly record the information into the end portion (i.e. the edge portion) in the recording area 22B at a stable constant displacement speed.

As described above, according to the information recording / reproducing apparatus 10, the size of the scan range of each of the probes 14 is increased as compared to that of each of the recording areas 22, so that all the recording areas 22 can be scanned by two or more probes. This allows the accurate scan of each recording area 22 even if one portion of the probes 14 arranged in the probe array 11 deteriorates or has trouble. Moreover, if the scan control device 13 is constructed to perform the scan control such that one probe included in the plurality of probes 14 scans two recording areas 22 which are mutually adjacent, without a break in time, it is possible to realize the certain recording or reading of the information even in the end portions in the recording areas 22, while the probes 14 are displaced at a stable speed. This allows the certain recording and reading of the information even near the end portion in each recording area 22. Thus, it is possible to effectively use each recording area 22 for the recording and reading of the information (i.e. it is possible to record and pack the information into every corner of each recording area 22 and certainly read it), and it is possible to increase the recording capacity of the information of the recording medium 20.

Incidentally, a relationship between the size of the scan range of each probe and that of each recording area of the recording medium can be understood not only from an approach to expand the size of the scan range of each probe with respect to the prearranged size of each recording area of the recording medium, but also from an opposite approach to reduce the size of each recording area of the recording medium with respect to the prearranged size of the scan range of each probe. For example, if the scan range of each probe is already set and the scan range cannot be changed for various reasons, the size of each of the recording areas to be arranged on the recording surface of the recording medium is formed to make it smaller than that of the scan range which is set with respect to each of the probes, and the recording areas are made reasonably close to each other (e.g. the recording areas may be in contact with each other, or there may be an appropriate distance between the recoding areas). In this case, preferably, each size and the placement interval of two recording areas which are mutually adjacent on the recording surface of the recording medium, are set such that the two recording areas are completely included in the scan range which is set with respect to one probe (refer to FIG. 6 or FIG. 9). Moreover, out of the plurality of recording areas on the recording surface of the recording medium, each size and the placement intervals of a first recording area, a second recording area adjacent to and on the right side of the first recording area, a third recording area adjacent to and on the lower side of the first recording area, and a fourth recording area adjacent to and on the lower side of the second recording area may be set such that the four recording areas are included in the scan range which is set with respect to one probe (refer to FIG. 6 and FIG. 7). The recording medium having such a construction is also one of the embodiments in which the technical ideas of the present invention are embodied.

### (Second Embodiment)

The second embodiment of the information recording / reproducing apparatus and the recording medium of the present invention will be explained. Incidentally, in the explanation of the second embodiment below, the same constituent elements as those in the above-described first embodiment carry the same reference numerals, and their explanations will be omitted.

The information recording / reproducing apparatus in the second embodiment of the present invention can record a plurality of information (much information) onto the recording medium at a time, by using the probe array 11 having the plurality of probes 14, or read the plurality of information (much information) recorded on the recording medium at a time. The recording medium in the second embodiment of the present invention is used for the information recording / reproducing apparatus in the second embodiment of the present invention.

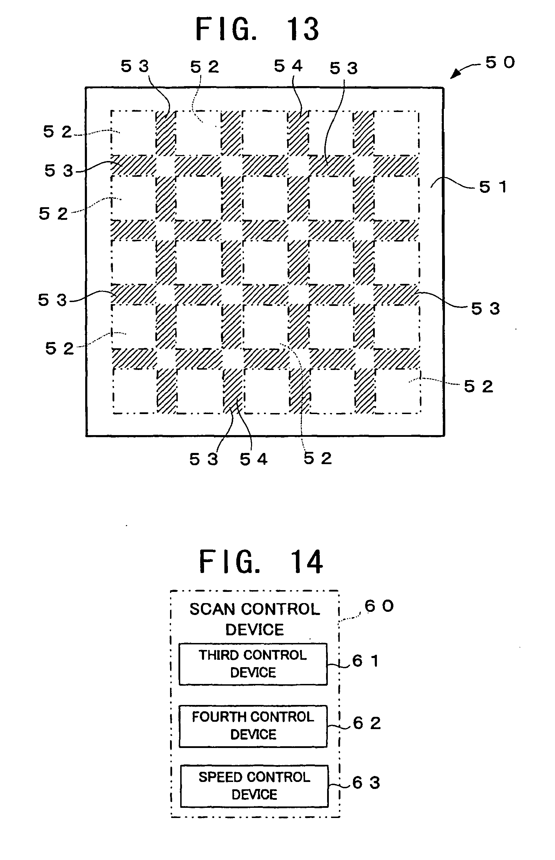

For convenience of explanation, at first, the recording medium in the second embodiment of the present invention will be explained. FIG. 13 shows the second embodiment of the recording medium of the present invention. As shown in FIG. 13, a plurality of first recording areas 52 are arranged on a recording surface 51 of a recording medium 50. Moreover, a second recording area 53 is placed between two first recording areas 52 which are mutually adjacent. Furthermore, displacement control information 54 for controlling the displacement of the probe array 11 or the recording medium 50 is recorded in advance in each second recording area 53. Incidentally, the external shape and material of the recording medium 50, the external shape, the number, and arrangement condition of the fist recording area 52, and the type and properties of the information to be recorded into the first recording area 52, or the like are the same as those of the recording medium 20 in the first embodiment.

The displacement control information 54 is intended to control the relative displacement speed of the probe array 11 with respect to the recording medium 50. The displacement control information 54 is, for example, pits, marks, or lines, which are arranged at predetermined intervals in the second recording area 53. The specific structures of the pits, marks, or lines vary depending on the recording method, the reproducing method, or the material of the recording medium 50. For example, in the case where the method of recording the information by opening a hole in a polymer film with heat is adopted, the pits, marks, or lines are holes or concave portions formed by the deformation of the material which forms a recording layer of the recording medium. On the other hand, in the case where the method of recording the information by using a spontaneous polarization of a ferroelectric substance is adopted, the pits, marks, or lines are constructed from the polarization direction of the ferroelectric material which forms a recording layer of the recording medium.

Incidentally, in the example shown in FIG. 13, the second recording areas 53 are disposed in all the free spaces among the first recording areas 52 which are mutually adjacent on the recording surface 51. However, the present invention is not limited to this example. For example, the second recording areas 53 may be disposed in several of the free spaces among the first recording areas 52 which are mutually adjacent. Moreover, the displacement control information 54 to be recorded into the second recording area 53 is not limited to the control information for controlling the relative displacement speed of the probe array 11 with respect to the recording medium 50. For example, the displacement control information 54 may be another control information, such as control information for controlling a position relationship between the recording surface 51 and the probe array 11.

Next, the information recording / reproducing apparatus in the second embodiment of the present invention will be explained. FIG. 14 shows a characteristic part of the information recording / reproducing apparatus in the second embodiment of the present invention. The characteristic part in the second embodiment is a scan control device 60. The other structures except this, i.e. the structures of the probe array 11 and the displacement mechanism 12, are the same as those in the information recording / reproducing apparatus 10 (refer to FIG. 1).

The scan control device 60 defines the scan range of each of the probes 14 and performs scan control of the plurality of probes 14 in cooperation with the displacement mechanism 12. The scan control device 60 is provided with: a third control device 61; a fourth control device 62; and a speed control device 63. The third control device 61 performs scan control such that one probe included in the plurality of probes 14 scans the first recording area 52 (or the first recording areas 52). The fourth control device 62 performs scan control such that the one probe scans the second recording area 53 (or the second recording areas 53). The speed control device 63 controls the displacement speed of the recording medium 50 (i.e. the relative displacement speed of the probes 14 with respect to the recording surface 51), on the basis of the displacement control information 54 recorded in the second recording area 53 of the recording medium 50.

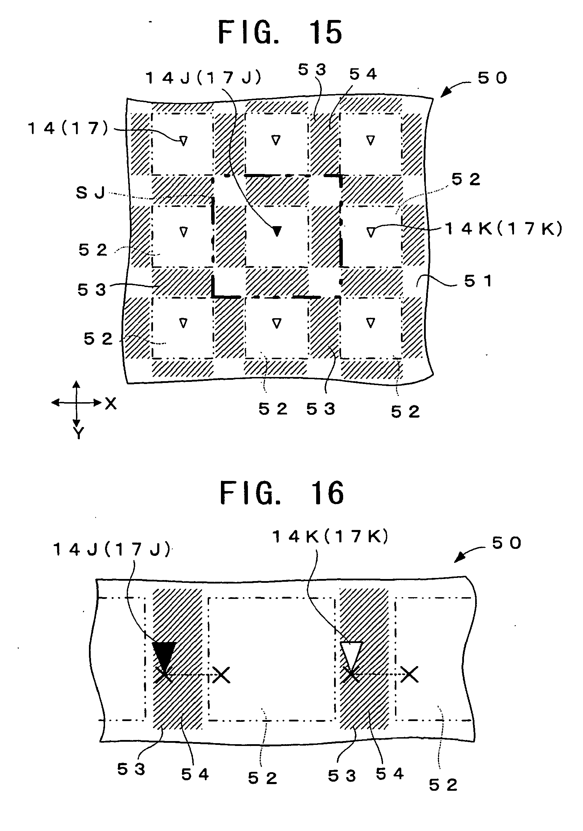

FIG. 15 shows a scan range SJ of a probe 14J (a needle 17J) defined by the scan control device 60. As shown in FIG. 15, the size of the scan range SJ of the probe 14J is larger than that of one first recording area 52. More specifically, the scan range SJ of the probe 14J has a size capable of covering one first recording area 52 as a whole and four second recording areas 53 disposed on the left side, right side, upper side, and lower side of the one first recording area 52. Incidentally, the size of the scan range of each of the other probes 14 is the same as that of the scan range SJ.

FIG. 16 shows one example of an operation realized by the scan control of the scan control device 60. FIG. 16 shows an enlarged portion in which the probe 14J and an adjacent probe 14K are disposed, out of the probe array 11 and the recording medium 50 in FIG. 15. As shown in FIG. 16, at first, at the start of the scan, under the control of the fourth control device 62, the probe 14J (14K) scans for the displacement control information 54 recorded in the second recording area 53. Then, the speed control device 63 controls the displacement speed of the recording medium 50, on the basis of the displacement control information 54 read via the probe 14J (14K). This determines the relative displacement speed of the probe array 11 with respect to the recording surface 51, to thereby determine the relative displacement speed of the probe 14J (14K). For example, as shown in FIG. 16, the probe 14J (14K) stopped on the left side in the second recording area 53 starts to move from this position to the right, and increases its relative displacement speed to a stable constant speed by the time it passes through the second recording area 53. Incidentally, the speed control process on the speed control device 63 can be realized by Phase-Locked Loop (PLL) control or the like.

Then, from the second recoding area 53, the probe 14J (14K) at a stable constant speed enters the first recording area 52 which is next to the second recording area 53. At this time, the third control device 61 starts to operate. Then, under the control of the third control device 61, the probe 14J (14K) scans the first recording area 52, reads the information recorded in the first recording area 52, or records the information into the first recording area 52. Incidentally, at the same time of this, under the control of the first control device 61, the other probes 14 arranged in the probe array 11 scan the first recording areas 52 located under the respective probes, read the information recorded in the first recording areas 52, or record the information into the first recording areas 52.

As described above, according to the information recording / reproducing apparatus and the recording medium in the second embodiment, the second recording area 53 is disposed between two first recording areas 52 which are mutually adjacent on the recording surface 51 of the recording medium 50, the displacement control information 54 is recorded in advance in the second recording area 53, and the size of the scan range of one probe 14 is larger than that of one recording area 52, which enable the one probe 14 to scan both the second recording areas 53 and the first recoding area 52. Thus, it is possible to set the relative displacement speed of each probe 14 by scanning for the displacement control information 54 recorded in the second recording area 53. Namely, it is possible to make the probe sufficiently move to give momentum while each probe 14 is displaced on the outer side of respective one of the first recording areas 52, and it is possible to increase the relative displacement speed of each probe 14 with respect to the recording surface 51, to a stable constant speed. By this, each probe 14 can scan respective one of the first recording areas 52 at a stable constant speed as soon as entering the respective one of the first recording areas 52, which allows the certain recording or reading of the information with respect to the respective one of the first recording areas 52. Therefore, it is possible to certainly record or read the information from the end portion (edge portion) in each first recording area 52, so that the entire area of each first recording area 52 can be used for the recording or reading of the information (i.e. it is possible to fully record the information into every corner of each first recording area 52 and certainly read it), and that it is possible to increase the recording capacity of the information of the recording medium 50.

### EXAMPLE

An example of the present invention will be explained hereinafter with reference to the drawings. In the example below, the information recording / reproducing apparatus and the recording medium of the present invention are applied to an information recording / reproducing apparatus and a recording medium which adopts the thermomechanical recording method, and this is one preferable example to carry out the present invention.

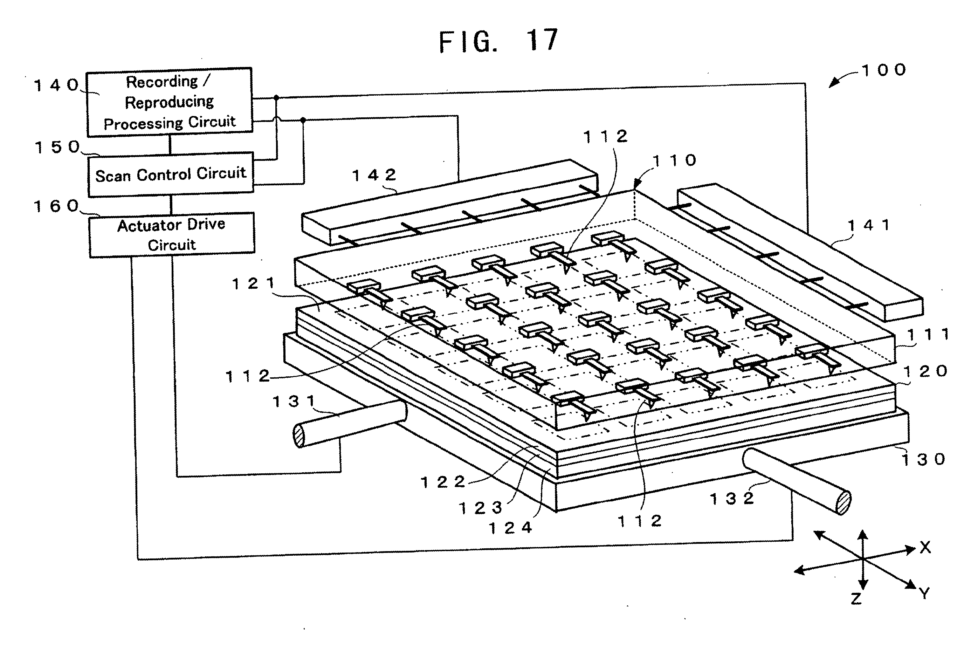

FIG. 17 shows an information recording / reproducing apparatus 100 which is an example of the present invention. The information recording / reproducing apparatus 100 in FIG. 17 is provided with: a probe array 110; a recording medium 120; an X-Y-Z stage 130; a recording / reproducing processing circuit 140; a scan control circuit 150; and an actuator drive circuit 160.

The probe array 110 is provided with a substrate 111 and a plurality of probes 112. The substrate 111 is formed from silicon compounds, glass, or metal, or the like. The substrate 111 is disposed over a recording surface 121 of the recording medium 120. Incidentally, for convenience of explanation, FIG. 17 shows the substrate 111 in a perspective or see-through manner. However, usually, the substrate 111 is not transparent, although it may be transparent in some cases depending on the choice of its material.

Each probe 112 is formed from high doped silicon. Each probe 112 is provided with an arm and a needle. The arm is elastic and can be bent. The base or anchor side of the arm is supported on the substrate 111, and the needle is provided on the tip of the arm. The diameter of the needle tip is several to several tens nanometers. Moreover, there is a piezoelectric element for detecting the bend of the arm, provided on the surface of the arm. The total number of the probes 112 is 25, and the probes 112 are arranged in a matrix of 5 × 5. A distance between two probes 112 which are mutually adjacent in the X direction is constant. Moreover, a distance between two probes 112 which are mutually adjacent in the Y direction is constant.

The external shape of the recording medium 120 is quadrilateral and plate-like. The recording medium 120 is provided with: a first polymer layer 122; a second polymer layer 123; and a silicon substrate 124. The first polymer layer 122 is intended to record the information therein, and has the recording surface 121 on its surface. The first polymer layer 122 is formed on the second polymer layer 123 which is on a silicon substrate 124. The material of the first polymer layer 122 is PMMA (polymethylmethacrylate), for example. The second polymer layer 123 is intended to prevent abrasion at the needle tip generated by the collision of the needle and the recording medium 120. The material of the second polymer layer 123 is closslinked photoresist, for example. The silicon substrate 124 is formed from a silicon material which is excellent in heat conductivity and heat radiation or release. The silicon substrate 124 supports the first polymer layer 122 and the second polymer layer 123, and has a function to promote the radiation of heat in recording.

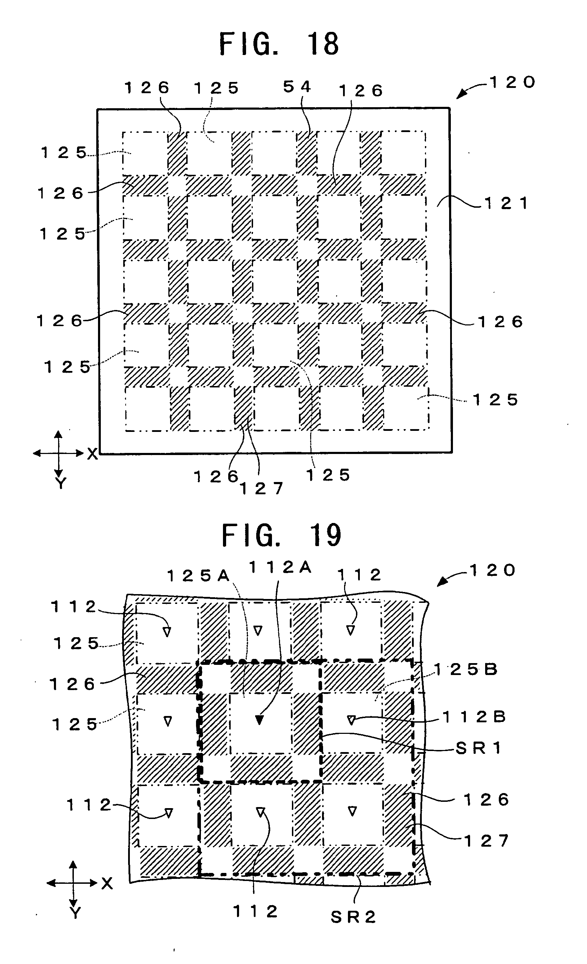

FIG. 18 shows the recording surface 121 of the recording medium 120. As shown in FIG. 18, there are twenty five first recording areas 125 formed on the recording surface 121 of the recording medium 120. The first recording areas 125 are arranged in a matrix of 5 × 5. One first recording area 125 corresponds to one probe 112 in position. Each of the first recording areas 125 is intended to record therein the so-called content information, such as video, audio, a text, and a program, the tracking information, the address information, and the position information, or the like.

On the recording surface 121, a second recording area 126 is formed between two first recording areas 125 which are mutually adjacent in the X direction. Moreover, the second recording area 126 is also formed between two first recording areas 125 which are mutually adjacent in the Y direction. Furthermore, displacement control information 127 is recorded in advance in each of the second recording areas 126. The displacement control information 127 is intended to control the relative displacement speed of the probe array 110 with respect to the recording medium 120 (incidentally, it is the recording medium 120 that is actually displaced). Incidentally, the tracking information or the position information may be recorded in the second recording area 126.

Back to FIG. 17, the X-Y-Z stage 130 displaces the recording medium 120 mounted thereon, in the X direction and in the Y direction, which are parallel to the recording surface 121, and in the Z direction, which is perpendicular to the recording surface 121. There are actuators 131 and 132 for displacing the recording medium 120 in the X direction, in the Y direction, and in the Z direction, or the like, mounted on the X-Y-Z stage 130. The actuators are formed from a piezoelectric material, such as PZT, for example.

The recording / reproducing processing circuit 140 is provided with an operation processing circuit and a memory circuit, or the like. The recording / reproducing processing circuit 140 is electrically connected to each of the probes 112 via multiplexers 141 and 142. In recording the information, the recording / reproducing processing circuit 140 supplies an electric signal corresponding to the information to be recorded onto the recording medium 120, to each probe 112. Moreover, in recording the information, the recording / reproducing processing circuit 140 supplies information which indicates a position at which the information is to be recorded (hereinafter referred to as "record-position-information"), to the scan control circuit 150. On the other hand, in reproducing the information, the recording / reproducing processing circuit 140 receives the information read by each probe 112 (a detection signal) and performs an information reproduction operation. Moreover, in reproducing the information, the recording / reproducing processing circuit 140 supplies information which indicates a position at which the information is to be read (hereinafter referred to as "read-position-information"), to the scan control circuit 150.

The scan control circuit 150 is provided with an operation processing circuit and a memory circuit, or the like. The scan control circuit 150 is electrically connected to each of the probes 112 via the multiplexers 141 and 142. The scan control circuit 150 performs scan control of the probes 112 in cooperation with the recording / reproducing processing circuit 140, the actuator drive circuit 160, and the X-Y-Z stage 130. Specifically, in recording the information, the scan control circuit 150 obtains the record-position-information from the recording / reproducing processing circuit 140, detects information which indicates a current position of each probe 112 on the recording surface 121 (hereinafter referred to as "probe position information") via each probe 112, and determines the displacement direction and displacement distance of the recording medium 120 on the basis of these information. Then, the scan control circuit 150 outputs a drive command to the actuator drive circuit 160 so as to displace the recording medium 120 in the determined displacement direction, only by the determined displacement distance. On the other hand, in reproducing the information, the scan control circuit 150 obtains the read-position-information from the recording / reproducing processing circuit 140, detects the probe position information via each probe 112, and determines the displacement direction and displacement distance of the recording medium 120 on the basis of these information. Then, the scan control circuit 150 outputs a drive command to the actuator drive circuit 160 so as to displace the recording medium 120 in the determined displacement direction, only by the determined displacement distance. Moreover, the scan control circuit 150 has a function of defying two types of scan ranges for each probe 112, a function of performing a scan-range-change-process, and a function of performing a speed-control-process. These functions will be described later.

The actuator drive circuit 160 drives the actuators 131 and 132 of the X-Y-Z stage 130 or the like, in accordance with the drive command outputted from the scan control circuit 150, to thereby displace the recording medium 120 in the X direction and in the Y direction. The actuator drive circuit 160 can also displace the recording medium 120 in the Z direction. For example, at the start of recording or reproducing the information, the actuator drive circuit 160 controls a not-illustrated actuator of the X-Y-Z stage 130, to thereby displace the recording medium 120 in the Z direction and contact the needle tip of each probe 112 with the recording surface 121 of the recording medium 120.

The information record operation of the information recording / reproducing apparatus 100 is as follows. At first, the actuator drive circuit 160 displaces the recording medium 120 in the X direction and in the Y direction, to thereby displace the probes 112 to record-start-positions. Then, the actuator drive circuit 160 displaces the recording medium 120 in the Z direction to contact the needle tip of each probe 112 with the recording surface 121 of the recording medium 120. At this time, the needle of each probe 112 is pushed by the recording surface 121, and a force is applied to the tip portion of the arm of each probe 112 via the needle. Thus, the arm becomes in a slightly bend condition. Then, the recording / reproducing processing circuit 140 applies an electric signal corresponding to the information to be recorded, to each probe 112. The application of the electric signal gives heat of approximately 400 degree C, for example, to the needle of each probe 112, to thereby soften the first polymer layer 122 under the needle. Then, by the elastic force of the needle, the needle tip goes into the first polymer layer 122, to thereby form a pit (a hole or a concave portion) in the first polymer layer 122. Then, with the displacement of the recording medium 120 in the X direction and in the Y direction, the record operation as described is repeated, and the information to be recorded is recorded into the first polymer layer 122. The scan control circuit 150 controls overall combination of such a record operation and the displacement of the recording medium 120, i.e. the "scan", on the basis of the record-position-information and the probe position information. Incidentally, in the record operation, out of the twenty five probes 112, one or several probes 112 are not used to record the information, but to read the tracking information or the position information recorded on the recording medium 121, to thereby supply this information to the scan control circuit 150. The scan control circuit 150 obtains the probe position information on the basis of the supplied information.

On the other hand, the information reproduction operation of the information recording / reproducing apparatus 100 is as follows. At first, the actuator drive circuit 160 displaces the recording medium 120 in the X direction and in the Y direction, to thereby displace the probes 112 to read-start-positions. Then, the actuator drive circuit 160 displaces the recording medium 120 in the Z direction to contact the needle tip of each probe 112 with the recording surface 121 of the recording medium 120. At this time, the needle of each probe 112 is pushed by the recording surface 121, and the arm becomes in a slightly bent condition. Then, the actuator drive circuit 160 displaces the recording medium 120 in the X direction and in the Y direction. If the probe 112 is displaced onto the pit by the displacement of the recording medium 120 in the X direction and in the Y direction, the needle of the probe 112 goes into the pit. As a result, the extent of the bend deformation of the arm becomes mild. The change in the bend of the arm is detected by a piezoelectric element as a detection signal, and the detection signal is supplied to the recording / reproducing processing circuit 140 and the scan control circuit 150. Then, the recording / reproducing processing circuit 140 extracts the content information from the detection signal and reproduces it. At the same time, the scan control circuit 150 extracts the probe position information from the detection signal. Then, the scan control circuit 150 drive-controls the actuator drive circuit 160, on the basis of the probe position information and the read-position-information obtained from the recording / reproducing processing circuit 140, to thereby displace the recording medium 120. Namely, in reproducing the information, the scan control circuit 150 performs the "scan" control in this manner.

The scan control circuit 150 defines two types of scan ranges for each probe 112. In recording or reproducing the information, each probe 112 performs the scan in any one of the two types of scan ranges.

FIG. 19 shows two types of scan ranges SR1 and SR2 defined with respect to one probe 112A out of the twenty five probes 112. The size of the scan range SR1 is large enough to cover one first recording area 125 and four second recording areas 126 surrounding the one first recording area 125 (refer to a thick dotted line in FIG. 19). On the other hand, the size of the scan range SR2 is large enough to cover four first recording areas 125 and twelve second recording areas 126 surrounding and placed among the four first recording area 125 (refer to a thick two-dot chain line in FIG. 19). The scan ranges having the two types of sizes are defined with respect to all the probes 112, in addition to the probe 112A. The two scan ranges are changed by the scan-range-change-process performed by the scan control circuit 150.

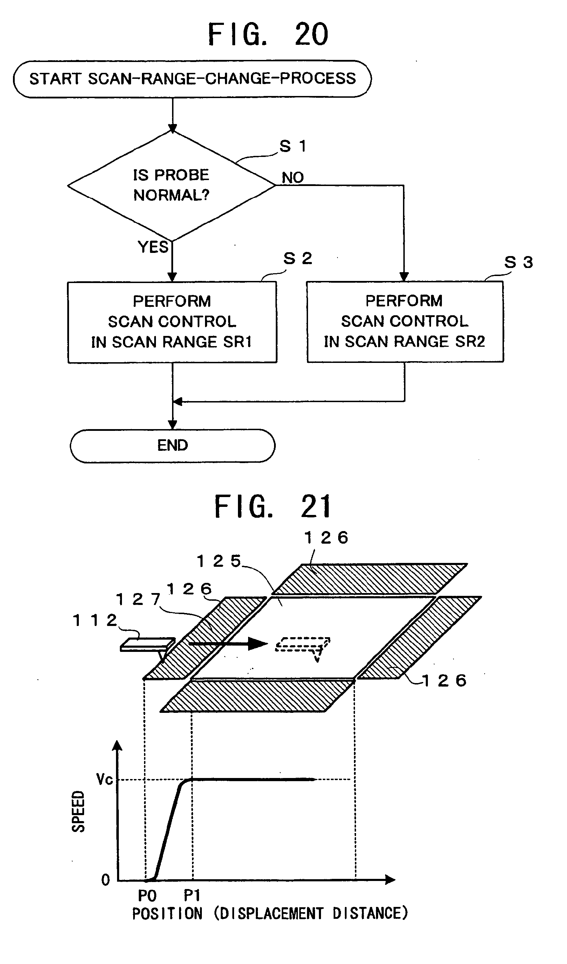

FIG. 20 shows the scan-range-change-process by the scan control circuit 150. For example, at the start of recording or reading the information, the scan control circuit 150 performs fault diagnosis for each probe 112 (step S1). If all the probes 112 are normal (the step S1: YES), the scan control circuit 150 performs the scan control such that each probe 112 scans the scan range SR1. On the other hand, if any of the probes 112 has trouble (the step S1: NO), the scan control circuit 150 performs the scan control such that each probe 112 scans the scan range SR2 (step S3).

By such a scan-range-change-process, the following operation can be realized. For example, in FIG. 19, if all the probes 112 are normal, each probe 112 scans one recording area 125 corresponding to the probe itself, such as that the probe 112A scans a recording area 125A, and that a probe 112B scans a recording area 125B. On the other hand, for example, if the probe 112B has trouble, the probe 112A disposed next to the probe 112B scans not only the recording area 125A, but also the recording area 125B to be scanned by the probe 112B.

By this, even if a probe has trouble, it is possible to accurately scan a recording area corresponding to the probe in failure, by using another probe. Therefore, even if there is an initial failure in a probe which is one portion of the probe array, it is possible to prevent the fact from appearing as the defect of the information recording / reproducing apparatus 100. In practical, it is possible to increase the yield of the probe array. Moreover, even if one portion of the probe array deteriorates and has trouble by its use, it is possible to prevent the fact from appearing as the failure or trouble of the information recording / reproducing apparatus 100, and it is possible to increase the durability of the information recording / reproducing apparatus 100.

FIG. 21 shows the speed-control-process by the scan control circuit 150. As described above, the second recording area 126 is formed between two first recording areas 125 which are mutually adjacent on the recording surface 121, and the displacement control information 127 is recorded in advance in each of the second recording areas 126. The displacement control information 127 is intended to control the relative displacement speed of the probe array 110 with respect to the recording medium 120. In recording or reproducing the information, the scan control circuit 150 performs the speed-control-process as described below, by using the displacement control information 127.

For example, as shown in FIG. 21, at the start of recording or reproducing the information, the scan control circuit 150 displaces each probe 112 to one end portion (a position P0) of each second recording area 126 and stops it once. Then, the scan control circuit 150 displaces each probe 112 from the one end portion (the position P0) to the other end portion (a position P1) of the each second recording area 126. While each probe 112 is displaced in the each second recording area 126, the scan control circuit 150 increases the displacement speed of each probe 112 to a constant speed Vc. Namely, an interval P0-P1 is a preparation section for each probe 112. The speed control of each probe 112 in the interval P0-P1 is performed by the scan control circuit 150 detecting (i.e. reading), via each probe 112, the displacement control information 127 recorded in each second recording area 126. Incidentally, with respect to the reading of the displacement control information 127, it is unnecessary to use all the probes 112, and it is enough to use one or several probes 112. Then, the scan control circuit 150 makes each probe 112 get into each first recoding area 125 next to the each second recording area 126, while maintaining the constant speed Vc of the displacement speed of each probe 112. At the moment each probe 112 enters each first recording area 125, the recording and reading of the information is started with respect to each first recording area 125. The constant speed Vc is suitable to record the information into each first recording area 125 by using each probe 112, or to read the information recorded in each first recording area 125 by using each probe 112. Incidentally, if an appropriate speed to record the information is different from that to read the recorded information, two types of speeds which are set in advance may be selected, in recording and reading the information.

As described above, at a stage before each probe 112 enters each first recording area 125, the displacement speed of each probe 112 is increased to the constant speed Vc, so that it is possible to scan each first recoding area 125 from the end portion (i.e. the edge portion) at a stable speed. Therefore, it is possible to certainly record the information from the edge portion of each first recording area 125, and it is possible to certainly read the information recorded near the end portion of each first recording area 125. As a result, it is possible to fully record the information from the central portion to the end portion of each first recording area 125, to thereby increase the recording capacity of the recording medium 120.

Incidentally, the displacement control information 127 can be detected or read without any problem even if each probe 112 is in preparatory motion. This is because the displacement control information 127 is lower-density, low-degree information, as compared to the normal content information. Namely, the speed control of each probe 112 can be realized as long as there is the lower-density, low-degree information (e.g. a pit row having pit intervals larger than those of the normal content information, or a pit row in which pits are merely and simply arranged at constant intervals) on the recording medium. The above explanation seems as if each probe 112 itself were displaced, but in fact, the displacement of each probe 112 is relative motion, realized by the displacement of the recording medium 120. The above-described speed-control-process can be realized even by adopting such a construction that an actuator is provided for the probe array to make it movable, and the construction as described above can be also considered to be one aspect of the present invention.

## Claims

1. An information recording / reproducing apparatus (10, 100),
said information recording / reproducing apparatus (10, 100) comprising:
a recording medium (20, 50, 120); and
a probe array (11, 30, 111) having a plurality of probes (14, 31, 112) for scanning a recording surface (21, 51, 121) of said recording medium (20, 50, 120) in order to control recording of information, reading of the information, and the recording and reading of the information,
said recording medium (20, 50, 120) comprising:
first recording areas (22, 52, 125) arranged on a recording surface (21, 51, 121); and
second recording areas (53, 126) disposed in the free space between two of the first recording areas which are mutually adjacent on the recording surface (21, 51, 121), said second recording areas having displacement control information recorded therein,
each of the first recording areas (22, 52, 125) corresponds to at least one probe (14, 31, 112) of the probe array (11, 30, 111),
said information recording / reproducing apparatus (10, 100) further comprises:
a displacement mechanism (12, 130) for displacing said probe array (11, 30, 111) or said recording medium (20, 50, 120) in parallel with the recording surface (21, 51, 121); and
a scan control device (13, 60, 150) for defining a scan range of each of the plurality of probes (14, 31, 112) and performing scan control of the plurality of probes (14, 31, 112) in cooperation with said displacement mechanism (12, 130),
the scan range of each of the plurality of probes (14, 31, 112) is larger than the size of the first recording areas (22, 52, 125), so that each probe (14, 31, 112) can scan at least both one first recording area of the first recording areas (22, 52, 125) and one second recording area (53, 126) which is adjacent to the one first recording area, and
the scan range of each of the plurality of probes (14, 31, 112) is at least twice as long as a distance between two probes which are mutually adjacent, in one direction which is parallel to the recording surface (21, 51, 121).

2. The information recording / reproducing apparatus (10) according to claim 1, **characterized in that** said scan control device (13) comprises:
a first control device (41) for performing scan control such that a first probe (14A) included in the plurality of probes (14) scans the one first recording area (22A) included in the first recording areas (22); and
a second control device (42) for performing scan control such that a second probe (14B) which is included in the plurality of probes (14) and which is located adjacent to the first probe (14A) scans the one first recording area (22A).

3. The information recording / reproducing apparatus (10) according to claim 2, **characterized in that**
said scan control device (60) comprises:
a third control device (61) for performing scan control such that one probe included in the plurality of probes (14, 31) scans the first recording area (22, 52); and
a fourth control device (62) for performing scan control such that the one probe scans the displacement control information.

4. The information recording / reproducing apparatus (10) according to claim 3, **characterized in that** said information recording / reproducing apparatus (10) further comprises a speed control device (63) for controlling a displacement speed of said probe array (11, 30) or said recording medium (20, 50) on the basis of the displacement control information read by the scan control by the fourth control device (62).

5. The information recording / reproducing apparatus (10, 100) according to claim **characterized in that** said scan control device (13, 60, 150) performs scan control such that one probe included in the plurality of probes (14, 31, 112) scans two of the first recording areas (22, 52, 125) which are mutually adjacent, without a break in time.

6. The information recording / reproducing apparatus (10, 100) according to any one of claims 1 to 5, **characterized in that**
an external shape of each of the first recording areas (22, 52, 125) is quadrilateral, and
said displacement mechanism (12, 130) displaces said probe array (11, 30, 111) or said recording medium (20, 50, 120) in two directions which substantially intersect at right angles in the recording surface (21, 51, 121).

## Patentansprüche

1. Informationsaufzeichnungs-/wiedergabegerät (10, 100), wobei das Informationsaufzeichnungs-/wiedergabegerät (10, 100), folgendes umfasst:
ein Aufzeichnungsmedium (20, 50, 120) und
eine Fühleranordnung (11, 30, 111) mit einer Vielzahl von Fühlern (14, 31, 112) zum Abtasten einer Aufzeichnungsoberfläche (21, 51, 121) des Aufzeichnungsmediums (20, 50, 120), um ein Aufzeichnen von Informationen, ein Lesen der Informationen und ein Aufzeichnen und Lesen der Informationen zu steuern,
wobei das Aufzeichnungsmedium (20, 50, 120) folgendes umfasst:
erste Aufzeichnungsbereiche (22, 52, 125), die auf einer Aufzeichnungsoberfläche (21, 51, 121) angeordnet sind, und
zweite Aufzeichnungsbereiche (53, 126), die in dem Freiraum zwischen zweien der ersten Aufzeichnungsbereiche vorgesehen sind, die sich einander benachbart auf der Aufzeichnungsoberfläche (21, 51, 121) befinden, wobei in den zweiten Aufzeichnungsbereichen Verschiebungssteuerinformationen aufgezeichnet sind,
jeder der ersten Aufzeichnungsbereiche (22, 52, 125) mindestens einem der Fühler (14, 31, 112) der Fühleranordnung (11,30, 111) entspricht, und
das Informationsaufzeichnungs-/wiedergabegerät (10, 100) ferner folgendes umfasst:
eine Verschiebeeinrichtung (12, 130), um die Fühleranordnung (11, 30, 111) oder das Aufzeichnungsmedium (20, 50, 120) parallel zur Aufzeichnungsoberfläche (21, 51, 121) zu verschieben, und
eine Abtaststeuervorrichtung (13, 60, 150) zum Bestimmen eines Abtastbereichs von jedem von der Vielzahl der Fühler (14, 31, 112) und Durchführen einer Abtaststeuerung der Vielzahl der Fühler (14, 31, 112) im Zusammenwirken mit der Verschiebeeinrichtung (12, 130), wobei
der Abtastbereich von jedem der Vielzahl der Fühler (14, 31, 112) größer als das Ausmaß der ersten Aufzeichnungsbereiche (22, 52, 125) ist, so dass jeder Fühler (14, 31, 112) mindestens sowohl einen ersten Aufzeichnungsbereich der ersten Aufzeichnungsbereiche (22, 52, 125) als auch einen zweiten Aufzeichnungsbereich der zweiten Aufzeichnungsbereiche (53, 126) abtasten kann, der dem einen ersten Aufzeichnungsbereich benachbart ist, und
der Abtastbereich von jedem der Vielzahl der Fühler (14, 31, 112) in einer parallel zu der Aufzeichnungsoberfläche (21, 51, 121) verlaufenden Richtung mindestens zweimal so lang ist wie eine Entfernung zwischen zwei einander benachbarten Fühlern.

2. Informationsaufzeichnungs-/wiedergabegerät (10) nach Anspruch 1, **dadurch gekennzeichnet, dass** die Abtaststeuervorrichtung (13) folgendes umfasst:
eine erste Steuervorrichtung (41) zum Durchführen einer Abtaststeuerung, so dass ein erster Fühler (14A), der in der Vielzahl der Fühler (14) enthalten ist, den einen ersten Aufzeichnungsbereich (22A) abtastet, der in der Vielzahl der ersten Aufzeichnungsbereiche (22) enthalten ist, und
eine zweite Steuervorrichtung (42) zum Durchführen einer Abtaststeuerung, so dass ein zweiter Fühler (14B), der in der Vielzahl der Fühler (14) enthalten ist und der angrenzend an den ersten Fühler (14A) angeordnet ist, den einen ersten Aufzeichnungsbereich (22A) abtastet.

3. Informationsaufzeichnungs-/wiedergabegerät (10) nach Anspruch 2, **dadurch gekennzeichnet, dass** die Abtaststeuervorrichtung (60) folgendes umfasst:
eine dritte Steuervorrichtung (61) zum Durchführen einer Abtaststeuerung, so dass ein in der Vielzahl der Fühler (14, 31) enthaltener Fühler den ersten Aufzeichnungsbereich (22, 52) abtastet, und
eine vierte Steuervorrichtung (62) zum Durchführen einer Abtaststeuerung, so dass der eine Fühler die Verschiebesteuerungsinformationen abtastet.

4. Informationsaufzeichnungs-/wiedergabegerät (10) nach Anspruch 3, **dadurch gekennzeichnet, dass** das Informationsaufzeichnungs-/wiedergabegerät (10) ferner eine Geschwindigkeitssteuervorrichtung (63) umfasst, um eine Verschiebegeschwindigkeit der Fühleranordnung (11, 30) oder des Aufzeichnungsmediums (20, 50) auf der Basis der Verschiebesteuerinformation zu steuern, die durch die Abtaststeuerung mittels der vierten Steuervorrichtung (62) ausgelesen wird.

5. Informationsaufzeichnungs-/wiedergabegerät (10, 100) nach Anspruch 1, **dadurch gekennzeichnet, dass** die Abtaststeuervorrichtung (13, 60, 150) eine Abtaststeuerung so durchführt, dass ein Fühler, der in der Vielzahl der Fühler (14,31,112) enthalten ist, ohne zeitliche Unterbrechung zwei der ersten Aufzeichnungsbereiche (22, 52, 125) abtastet, die einander benachbart sind.

6. Informationsaufzeichnungs-/wiedergabegerät (10, 100) nach einem der Ansprüche 1 bis 5, **dadurch gekennzeichnet, dass**
eine äußere Form jedes der ersten Aufzeichnungsbereiche (22, 52, 125) viereckig ist, und
die Verschiebeeinrichtung (12, 130) die Fühleranordnung (11, 30, 111) oder das Aufzeichnungsmedium (20, 50, 120) in zwei Richtungen verschiebt, die sich im Wesentlichen im rechten Winkel auf der Aufzeichnungsoberfläche (21, 51, 121) schneiden.

## Revendications

1. Appareil d'enregistrement / de reproduction d'informations (10, 100), ledit appareil d'enregistrement / de reproduction d'informations (10, 100) comprenant :
- un support d'enregistrement (20, 50, 120) ; et
- un réseau de sonde (11, 30, 111) ayant une multitude de sondes (14, 31, 112) destinées à balayer une surface d'enregistrement (21, 51, 121) dudit support d'enregistrement (20, 50, 120) de manière à commander l'enregistrement des informations, la lecture des informations, et l'enregistrement et la lecture des informations,
ledit support d'enregistrement (20, 50, 120) comprenant :
- des premières zones d'enregistrement (22, 52, 125) disposées sur une surface d'enregistrement (21, 51, 121) ; et
- des secondes zones d'enregistrement (53, 126) disposées dans l'espace libre entre deux des premières zones d'enregistrement adjacentes l'une par rapport à l'autre sur la surface d'enregistrement (21, 51, 121), lesdites secondes zones d'enregistrement ayant des informations de commande de déplacement y étant enregistrées,
chacune des premières zones d'enregistrement (22, 52, 125) correspondant à au moins une sonde (14, 31, 112) du réseau de sonde (11, 30, 111),
ledit appareil d'enregistrement / de reproduction d'informations (10, 100) comprenant en outre :
- un mécanisme de déplacement (12, 130) destiné à déplacer ledit réseau de sonde (11, 30, 111) ou ledit support d'enregistrement (20, 50, 120) en parallèle avec la surface d'enregistrement (21, 51, 121) ; et
- un dispositif de commande à balayage (13, 60, 150) destiné à définir une plage de balayage de chacune de la multitude de sondes (14, 31, 112) et à exécuter une commande à balayage de la multitude de sondes (14, 31, 112) en coopération avec ledit mécanisme de déplacement (12, 130),
la plage de balayage de chacune de la multitude de sondes (14, 31, 112) est plus grande que la taille des premières zones d'enregistrement (22, 52,125), de telle sorte que chaque sonde (14, 31, 112) peut balayer au moins et une première zone d'enregistrement des premières zones d'enregistrement (22, 52, 125) et une seconde zone d'enregistrement (53, 126) adjacente à la première zone d'enregistrement, et
la plage de balayage de chacune de la multitude de sondes (14, 31, 112) est au moins deux fois plus longue qu'une distance entre deux sondes adjacentes l'une par rapport à l'autre, dans un sens parallèle à la surface d'enregistrement (21, 51, 121).

2. Appareil d'enregistrement / de reproduction d'informations (10) selon la revendication 1, **caractérisé par le fait que** ledit dispositif de commande à balayage (13) comprend :
- un premier dispositif de commande (61) destiné à exécuter une commande à balayage de telle sorte qu'une première sonde (14A) comprise dans la multitude de sondes (14) balaye la première zone d'enregistrement (22A) comprise dans les premières zones d'enregistrement (22) ; et
- un second dispositif de commande (61) destiné à exécuter une commande à balayage de telle sorte qu'une seconde sonde (14A) comprise dans la multitude de sondes (14) et située adjacente à la première sonde (14A) balaye la première zone d'enregistrement (22A).

3. Appareil d'enregistrement / de reproduction d'informations (10) selon la revendication 2, **caractérisé par le fait que** ledit dispositif de commande à balayage (60) comprend :
- un troisième dispositif de commande (61) destiné à exécuter une commande à balayage de telle sorte qu'une sonde comprise dans la multitude de sondes (14, 31) balaye la première zone d'enregistrement (22, 52) ; et
- un quatrième dispositif de commande (62) destiné à exécuter une commande à balayage de telle sorte qu'une sonde balaye l'information de commande de déplacement.

4. Appareil d'enregistrement / de reproduction d'informations (10) selon la revendication 3, **caractérisé par le fait que** ledit appareil d'enregistrement / de reproduction d'informations (10) comprend un dispositif de commande de vitesse (63) destiné à commander une vitesse de déplacement dudit réseau de sonde (11, 30) ou dudit support d'enregistrement (20, 50) en fonction de l'information de commande de déplacement lue par la commande à balayage par le quatrième dispositif de commande (62).

5. Appareil d'enregistrement / de reproduction d'informations (10, 100) selon la revendication 1, **caractérisé par le fait que** ledit dispositif de commande à balayage (13, 60, 150) exécute une commande à balayage de telle sorte qu'une sonde comprise dans la multitude de sondes (14, 31, 112) balaye deux des premières zones d'enregistrement (22, 52, 125) adjacentes l'une par rapport à l'autre, sans période d'adaptation.

6. Appareil d'enregistrement / de reproduction d'informations (10, 100) selon l'une quelconque des revendications 1 à 5, **caractérisé par le fait qu'**une forme extérieure de chacune des premières zones d'enregistrement (22, 52, 125) est quadrilatérale, et ledit mécanisme de déplacement (12, 130) déplace ledit réseau de sonde (11, 30, 111) ou ledit support d'enregistrement (20, 50, 120) dans deux directions qui s'entrecroisent substantiellement à angles droits dans la surface d'enregistrement (21, 51, 121).
